# EUROPEAN PATENT APPLICATION

(11) **EP 3 882 015 A1**
(43) Date of publication of application: **22.09.2021**
(21) Application number: 19885608.0
(22) Date of filing: 13.11.2019
(51) Int. Cl.: B32B 3/30

(54) **COMPOSITE BOARD STRUCTURE AND BOX STRUCTURE**

(30) Priority: 15.11.2018 CN 201811362232; 05.12.2018 CN 201822036760 U
(71) Applicant: Wu, Ming-Yuan, Taipei, Taiwan 11060 (TW)
(72) Inventor: Wu, Ming-Yuan, Taipei, Taiwan 11060 (TW)
(74) Representative: Cabinet Chaillot
(86) International application number: PCT/CN2019/117842
(87) International publication number: WO 2020/098668

(57) **Abstract**

A composite board structure and a box structure. According to the composite board structure, by using through holes (214) and pits (21), under the condition of greatly reducing the material and manufacturing costs, the structural performance of the board is improved, and the bending strength of the board is improved, so that the board can replace the existing boards such as corrugated paper, can be applied to structures such as a box, can replace the existing board and box structures under the condition of greatly reducing the material and manufacturing costs, can also be repeatedly used, and has great contribution to environmental protection and related industries.

## Description

### BACKGROUND OF THE INVENTION

### Field of Invention

The present invention relates to a composite board structure, in particular to a composite board structure and a box structure thferof capable of greatly saving materials and achieving high bending resistance and torsional strength.

### Related Art

Currently existing box boxes are made of paper, generally including corrugated boards and honeycomb paperboard. The corrugated paper is composed of at least three layers of paper. The upper and lower sides of the papers are planar papers, and the center is a wave-shaped strips. So that the three-layer structure provides sufficient strength to form a common box structure. Because of its innate structural relationship, the wave-shaped strips structure only can provide lateral bending resistance. For the bending along with the longitude direction, it is easy to damage by external forces.

The honeycomb paperboard is a hexagonal structure simulating honeycombs to replace the wave-shaped strips of the conventional corrugated papers to provide resistances in multiple directions. Therefore, the structural strength of the whole box can be greatly improved. However, because the manufacturing process is really too complicated and the amount of materials used does not decrease, the paper boxes currently on the market are still mostly made of the corrugated papers.

In addition, the corrugated paper is not waterproof, and the box has a weak resistance to moisture, whether the external moisture or moisture generated by items stored inside. There would be some requirements for the storage environment or limitations for the items to be transported. In recent years, with the raising awareness of environmental protections, the reuse of the boxes has always been the goal, because the manufacture of the corrugated paper is quite energy-consuming and polluting. Due to the aforementioned limitations, and the corrugated paper boxes are easily deformed by external collisions, after repeated use for several times, its state and strength will be significantly reduced. Thus, the chances of reuse are reduced.

In order to solve the above problem, there is a need in this art for a new composite board structure to replace the existing corrugated papers and overcome the related problems derived therefrom.

### SUMMARY OF THE INVENTION

It is a primary objective of this invention to provide a composite board structure and a box structure thferof to solve above-mentioned problems. By using a simple structure, it can offer sufficient bending resistance, external force twisting resistance and torsional strength.

It is another object of the present invention is to provide a composite board structure and a box structure thereof. While reducing the material usage amount, the manufacturing costs and the material costs are reduced. Also, because the structure is simple and easy to produce, it can replace the existing corrugated papers, other types of plates and the boxes formed therof.

Another object of the present invention is to provide a composite board structure and a box structure thereof. When plastics, foamed materials, plastic papers, metals and other materials are used, not only the amount of usage is reduced, but the reusability is increased. Moreover, due to the structural strength and the bending resistance is improved, it is helpful to the implementation of the existing transportation industry of reuse the boxes or remanufacturing of recycled materials, and meets the needs of environmental protection, energy saving and carbon reduction.

The objects of the present invention and the technical problems to be solved by the present invention are achieved by the following technical solutions.

The invention provides a composite board structure, characterized by comprising:
a supporting board being a flat plate shape; and
a structural plate having a plurality of pits to define a plate surface side and a pit side, wherein the structural plate is disposed on one side of the supporting board with the pit side.

The objects of the present invention and the technical problems to be solved by the present invention can also be further realized by the following technical measures.

In some embodiments of the invention, the pits have a closed annular shape.

In some embodiments of the invention, the structural plate further comprising a connecting rib to connect at least two pits.

In some embodiments of the invention, the supporting board further comprising at least on pit, wherein the pit of the supporting board is contacted to the pits of the structural plate or not.

The invention further provides a composite board structure, characterized by comprising:
a supporting board being a flat plate shape; and
a structural plate, being a thick plate and having a plurality of through holes to dispose on one side of the supporting board.

In some embodiments of the invention, the pits have a closed annular shape.

The invention further provides a box structure formed by a plurality of composite boards, characterized by that:
the composite board includes a supporting board and a structural plate, wherein the supporting board is a flat plate shape and the structural plate has a plurality of pits to define a plate surface side and a pit side, wherein the structural plate is disposed on one side of the supporting board with the pit side.

The objects of the present invention and the technical problems to be solved by the present invention can also be further realized by the following technical measures.

In some embodiments of the invention, the pits have a closed annular shape.

In some embodiments of the invention, the structural plate further comprising a connecting rib to connect at least two pits.

In some embodiments of the invention, the supporting board further comprising at least on pit, wherein the pit of the supporting board is contacted to the pits of the structural plate or not.

The invention further provides a box structure formed by a plurality of structural plates, characterized by that:
the structural plate has a plurality of pits.

The objects of the present invention and the technical problems to be solved by the present invention can also be further realized by the following technical measures.

In some embodiments of the invention, the pits have a closed annular shape.

In some embodiments of the invention, the structural plate further comprising a connecting rib to connect at least two pits.

In some embodiments of the invention, the pits of adjacent structural plates have different orientations or types.

In some embodiments of the invention, the pits of adjacent structural plates are engaged with each other at a contact location.

In some embodiments of the invention, a reinforcing strip is arranged between the adjacent structural plates.

In some embodiments of the invention, a frame plate is arranged outside the structural plates.

According to the composite board structure of the present invention, the composite board structure includes a supporting board and a structural plate. The structural plate includes a plurality of pits to define a plate surface side and a pit side, and the structural plate is disposed on one side of the supporting board with the pit side. Therefore, the bending resistance, the external force twisting resistance and the torsional strength are greatly improved by the lateral structure provided by the pits.

According to the composite board structure of the another embodiment of the present invention, it is adapted for the formed materials or other thick plates. By perforation, compounding, bonding or the likes, the lateral structure is provided while reducing material usage to improve the bending resistance, the external force twisting resistance and the torsional strength.

Moreover, the box formed by the above-mentioned plate structure not only has a simple structure, but also greatly reduces manufacturing and material costs. Also, because of its enhanced structural strength, it is less likely to be damaged, which facilitates repeated use. The implementation of the reuse of boxes in the transportation industry meets the needs of the environmental protection, the energy saving and the carbon reduction.

According to the box structure of the another embodiment of the present invention, the box is formed by the single layer structural plates, and the structural plate has a plurality of pits. The bending resistance, the external force twisting resistance and the torsional strength are greatly improved by the lateral structure provided by the pits. Therefore, it not only has a simple structure, but also greatly reduces manufacturing and material costs. Also, because of its enhanced structural strength, it is less likely to be damaged, which facilitates repeated use. The implementation of the reuse of boxes in the transportation industry meets the needs of the environmental protection, the energy saving and the carbon reduction.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

FIGS. 1A-1B are schematic diagrams of the composite board of this invention.
FIGS. 2A-2C are schematic diagrams of the structural plate of the composite board of this invention.
FIG. 3 is a schematic diagram of the structural plate with the connecting ribs of the composite board of this invention.
FIGS. 4A-4B are schematic diagrams of the structural plate with the pillars of the composite board of this invention.
FIGS. 5A-5B are schematic diagrams of another embodiment of the structural plate of the composite board of this invention.
FIG. 6 is a schematic diagram of another embodiment of the structural plate of the composite board of this invention.
FIG. 7 is a schematic diagrams of one embodiment of the box structure of this invention.
FIG. 8 is a schematic diagrams of another embodiment of the box structure of this invention.
FIG. 9 is a schematic diagrams of the box structure with the reinforcing strip and the frame plate of this invention.
FIG. 10 is a schematic diagrams of another embodiment of the box structure of this invention.
FIG. 11 is a schematic diagrams of the box structure with internal engagement of this invention.

### Reference numerals

### (Prior art)

- 10: supporting board
- 11: pillar
- 20: structural plate
- 201: plate surface side
- 202: pit side
- 21: pit
- 211: pit wall
- 212: pit bottom
- 213: protrusion
- 214: perforation
- 22: connecting rib
- 23: reinforcing strip
- 24: frame plate

### DETAILED DESCRIPTION OF THE INVENTION

In order to enable persons with ordinary skilled in the field to understand the characteristics and effects of the present invention, the following is a general description and definition of the terms mentioned in the specification and claims. Unless otherwise defined, all technical and scientific terms used herein have the same meaning as commonly understood by one of ordinary skill in the art to which this invention pertains. In the case of conflict, the present document, including definitions will control.

As used herein, the terms "comprises," "comprising," "includes," "including," "has," "having" or any other variation thereof are intended to cover a non-exclusive inclusion. For example, a component, structure, article, or apparatus that comprises a list of elements is not necessarily limited to only those elements but may include other elements not expressly listed or inherent to such component, structure, article, or apparatus. Further, unless expressly stated to the contrary, the term "or" refers to an inclusive or and not to an exclusive or. For example, a condition "A or B" is satisfied by any one of the following: A is true (or present) and B is false (or not present), A is false (or not present) and B is true (or present), and both A and B are true (or present). In addition, whenever open-ended transitional phrases are used, such as "comprises," "comprising," "includes," "including," "has," "having" or any other variant thereof, it is understood that transitional phrases such as "consisting essentially of' and "consisting of' are also disclosed and included.

In this description, the terms first, second and the like are used for distinguishing between similar elements and not necessarily for describing a sequential or chronological order. It is to be understood that the terms so used are interchangeable under appropriate circumstances, and the embodiments of the invention described herein are capable of operation in other sequences than described or illustrated herein.

The following terms or definitions are provided solely to aid in the understanding of the invention. These definitions should not be construed to have a scope less than understood by a person of ordinary skill in the art.

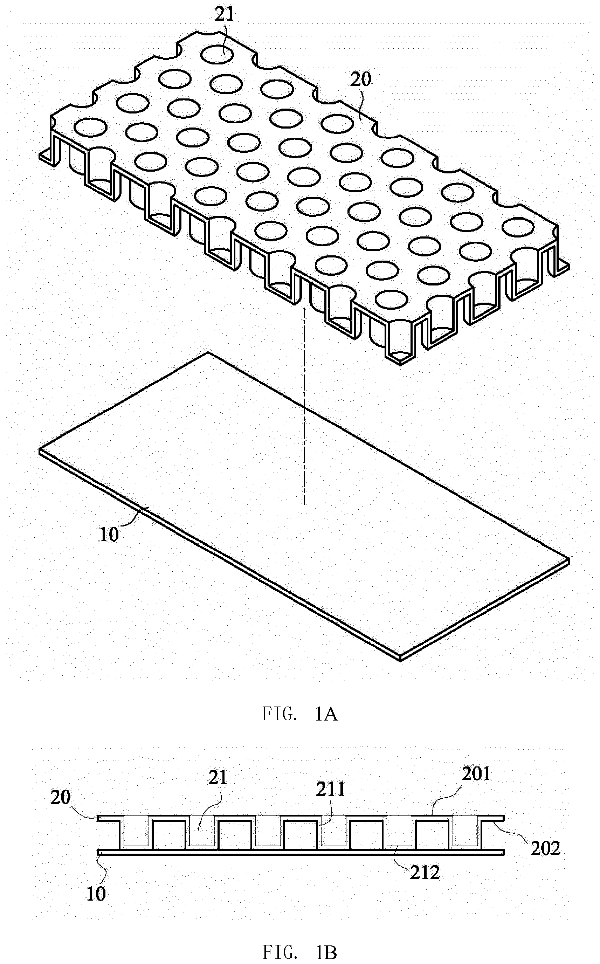

According to the composite board structure and its box structure according to the present invention, please refer to FIG. 1A and FIG. 1B, the composite board structure includes a supporting board 10 and a structural plate 20. The supporting board 10 is essentially a flat plate shape, and the structural plate 20 has a plurality of pits 21. Therefore, the structural plate 20 will be defined a plate surface side 201 and a pit side 202. According to the structure, the pit 21 includes the pit wall 211 and the pit bottom 212. The structural plate 20 is disposed on one side of the supporting board 10 with the pit side 202 by various ways such as gluing, radio frequency bonding, ultrasonic bonding, thermal compression, clamping and the likes, which dependeed on the materials and applications. However, the above is only for example, and it is not limited to only adopt these methods. The materials can be plastics, papers, foamed materials, polymers, metals or a combinations thereof.

Therefore, the composite board formed by the supporting board 10 and the structural plate 20, due to the lateral structure provided by the pits 21, has improved bending resistance, external force twisting resistance and torsional strengththe resistance. Please be noted that the so-called lateral structure of the pits 21 is respectively to the planes of the supporting board 10 and the structural plate 20. In other words, because the pit 21 is formed with substantially perpendicular to the surface of the structural plate 20, the supporting supporting board 10 and the structural plate 201 will inevitably form an angle with the surface of the planes (either generally or nearly perpendicular, but are not limited to being perpendicular, and the arrangement of the inclined surfaces can be employed). Therefore, when the whole composite board is bent by an external force, the pit wall 211 can provide a corresponding resistance to against the force. Therefore, the bending resistance, the external force twisting resistance and the torsional strengththe resistance can be improved. It should be noted that the pit 21 is a three-dimensional columnar structure, so that the resistance provided by the pit 21 is also multi-directional.

After the supporting board 10 and the structural plate 20 are bonded, the pit bottoms 212 of the structural plate 20 and the supporting board 10 do not disengage after being bonded. Due to the tensile resistance of the supporting board 10 and the structural plate 20, combined with the bonding force between the pit bottom 212 and the supporting board 10, the bending expansion or bending compression of the surface of the supporting board 10 and the structural plate 20 will be restricted to further improve bending resistance structural performance. On the other hand, in addition to the three-dimensional structure of the pit 21 itself, due to the relationship of the multiple pits 21 on the structural plate 20, even if the force is applied without passing the position of the pit 21 (pit wall 211), rather than passes through the plane between the pits 21, it will still be restricted and influenced by the pits 21 to achieve the purpose of improving the bending resistance, the resistance to the external force distortion and the bending resistance.

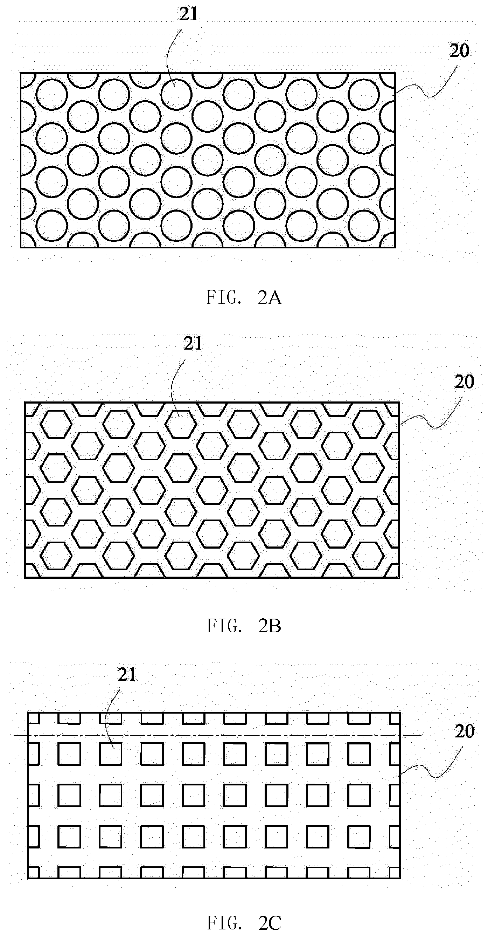

Moreover, for the shape and configuration of the pits 21, in addition to the square structure in FIG. 1A as above-mentioned, it may also be circular (see FIG. 2A) or hexagonal (see FIG. 2B), long square, etc. Excepting for the regular distribution (see FIG. 1A), it may also be staggered (see FIG. 2A), or a honeycomb-like minimum packing arrangement (see FIG. 2B). Except for the shapes and arrangements described above, the present invention is not limited to such arrangements or shapes, and any other shape, arrangement is applicable. Also, the depths of the pits 21 may also be equal or unequal. The shape, and arrangement may also be a mixture of any of the foregoing types. The density of the configuration of the pits 21 can also be determined according to actual needs. As previously mentioned, when the configuration of the pits 21 is more dense, the restriction is greater between the pits 21, and the structural strength is greater. Further, referring to FIG. 2C, if the arrangement between the pits 21 is relatively loose in the case of a square and linear arrangement, the restriction between the pits 21 are relatively weaker. But if the strength of the material itself is sufficient, or where the strength requirement is lower, the arrangement can also be adapted. However, if considering the requirement of the better strength and resistance, the staggered arrangement is better (see Figure 2A and Figure 2B).

As for the forming of the pit 21, it is also possible to determine various methods based on different materials of the plate material, such as stamping, vacuum forming, hot pressing, radio frequency or ultrasonic pressing, rolling, direct forming, etc. Also, the present invention is not limited to such manufacturing methods, and other forming methods may also be applied.

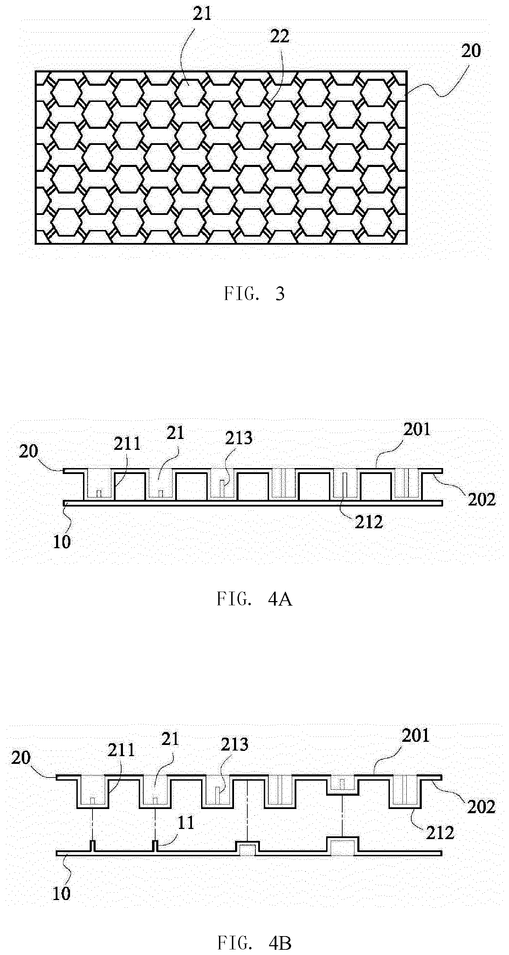

Furthermore, the above-mentioned pits 21 are independent of each other, ie, each pit 21 is not mutually communicated with each other. In order to further increase the strength based on the same concept, referring to FIG. 3, the connecting ribs 22 would also be added between the pits 21 to connect at least two pits 2 to further increase the strength. As a result, the plane between the pits 21 is not restricted only by the pits 21, but also due to the existence of the connecting ribs 22, which further improves the strength. The depth of the connecting rib 22 may be lower than that of the pit 21, or equal. The shape and the amount of the pits to be connected are also not specifically limited. The configuration position of the connecting rib 22 can be arranged according to the position needing to be strengthened. So that It is not necessarily necessary that all the pits 21 on the structural plate 20 have the connecting ribs 22.

In addition, as shown in FIG. 4A, the pit 21 can also be in a closed annular shape. There are a protrusion 213 inside the pit 21. The shape of the protrusion 213 can be the same as or different from the pit 21, and the height of the protrusion 213 can also be equal to or less than the depth of the pit 21. Please refer to FIG. 4B, the supporting board 10 corresponding to the structural plate 20 may also have a plurality of pillars 11, and the pillars 11 can be combined (inserted) with the bottom of the protrusions 213 of the pits 21 to increase the bonding strength. Also the pillars 11 may correspond to the positions of the pits 21 or not. As described above, its shape, position, arrangement, height, etc. can be changed, and not limited to the type shown in the figures.

On the other hand, the above-ementioned pits 21, the protrusions 213, the pillars 11 or the structural plate 20 can be punched to form different perforations on the wall, bottom, or the surface to increase the strength and greatly reduce used materials.

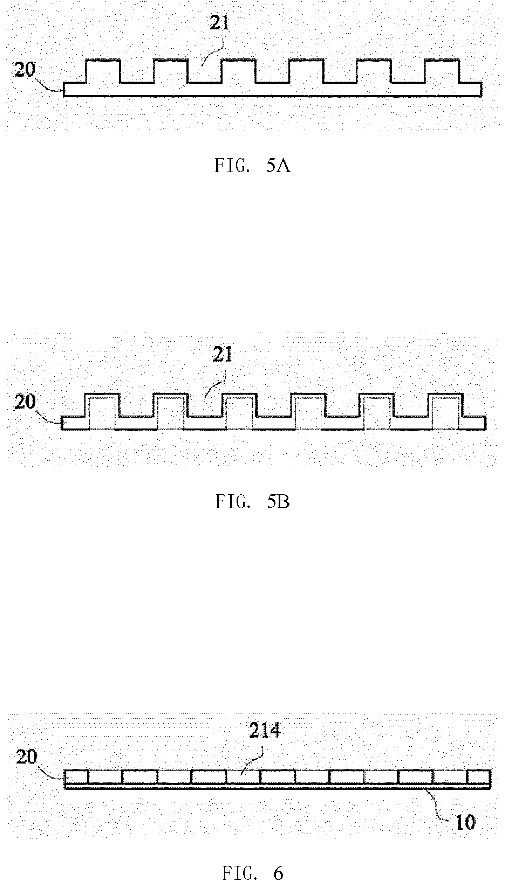

Furthermore, please refer to FIG. 5A, if it is a thick plate (for example, a foamed material), it can be formed by hot pressing, direct forming, etc., to form a structural plate 20 with pits 21. Also, if the side wall of the pit 21 is hollowed out, it will form a structure similar to that shown in FIG. 1A and FIG. IB. The structural plate 20 can also be punched directly to form the perforation 214, as shown in FIG. 6, which can also achieve the purpose of reducing the amount of material used while providing the ability to resist bending, external force twisting and torsion. Variations of the remaining arrangements, shapes, positions, etc. may be altered as previously described, and will not be repeated herein.

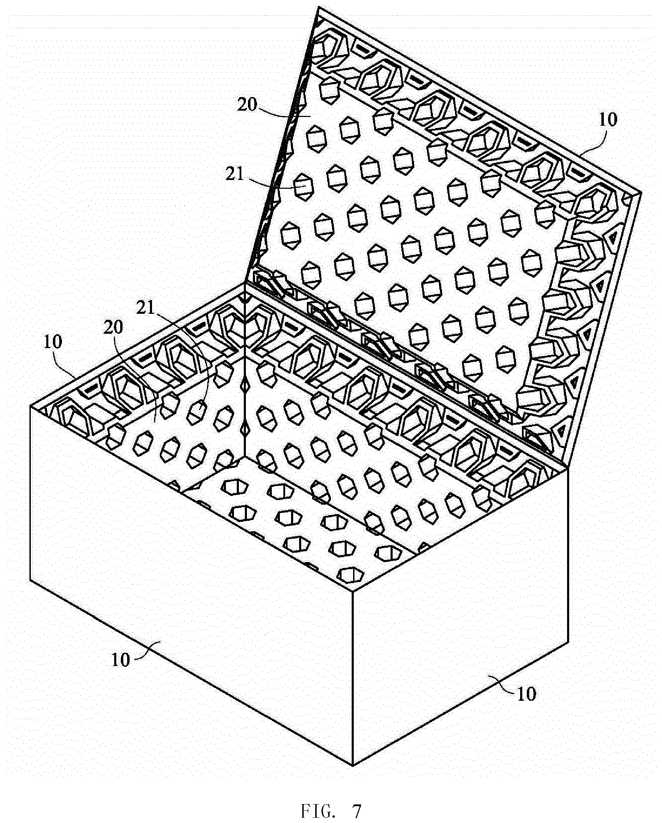

The box made of the composite board of any one of the foregoing embodiments, please refer to FIG. 7, which can replace the most common corrugated paper box. The strength can be greatly improved, the usage amount of the material is reduced, and the specific strength is high. And if the box is made of a waterproof material, the waterproof and moisture-proof performance are achieved. And the box has more durable performance, which is quite conducive to repeated use.

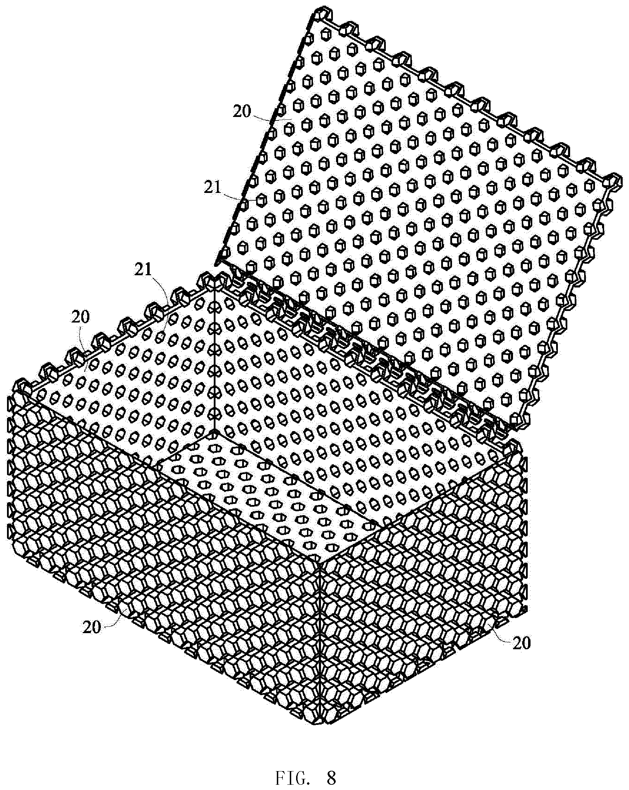

Please refer to FIG. 8, which is another embodiment of the present invention. The box structure is formed by only one layer of a structural plate 20 (also referred to as a structural sheet) of the composite plate of any one of the foregoing embodiments. Likewise, the structural plate 20 has a plurality of pits (also referred to as pit bodies) 21. Because of the lateral structure provided by the pits 21, the resistance to bending, external force twisting and torsional resistance can be improved. Please be noted that the so-called lateral structure of the pits 21 is respectively to the plane of the structural plate 20. In other words, because the pit 21 is formed with substantially perpendicular to the surface of the structural plate 20, the structural plate 201 will inevitably form an angle with the surface of the planes (either generally or nearly perpendicular, but are not limited to being perpendicular, and the arrangement of the inclined surfaces can be employed). Therefore, when the whole box structure is applied by an external force or a loading, the pit wall 211 can provide a corresponding resistance to against the force or the loading. Therefore, the bending resistance, the external force twisting resistance and the torsional strengththe resistance can be improved. Therefore, this box can replace the most common corrugated paper box. The strength can be greatly improved, the usage amount of the material is reduced, and the specific strength is high. The difficulty of production is significantly reduced, which is beneficial to improve production efficiency. And if the box is made of a waterproof material, the waterproof and moisture-proof performance are achieved. And the box has more durable performance, which is quite conducive to repeated use.

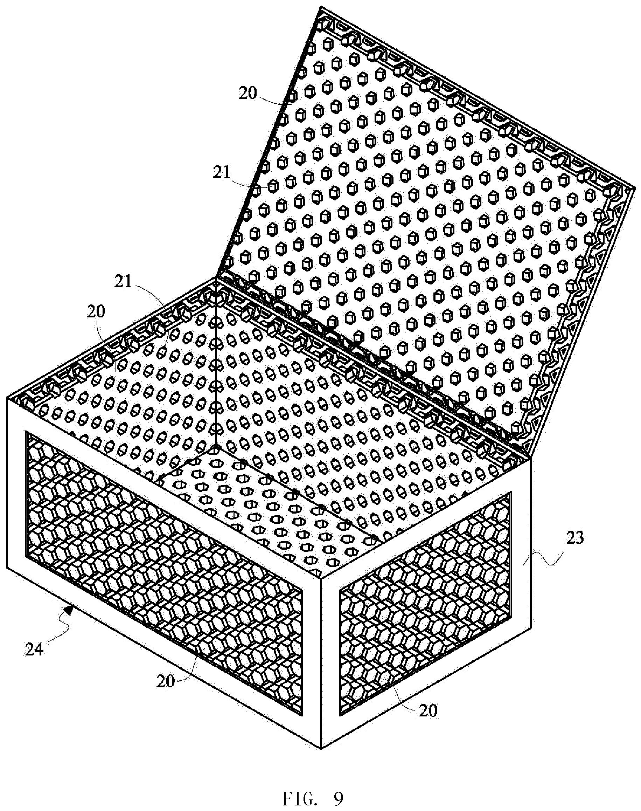

The box is formed by folding a single structural plate 20, and connecting at the joint, or directly engaging with a plurality of structural plates 20. The bonding method between the structural plates 20 does not need to be limited, and can be used, for example, for thermal bonding, adhering, clamping, locking, nailing and the like. In addition, the reinforcing strips 23 can be used to reinforce between adjacent structural plates 20, and the reinforcing strips 23 can even be extended to form a frame plate 24, as shown in FIG. 9.

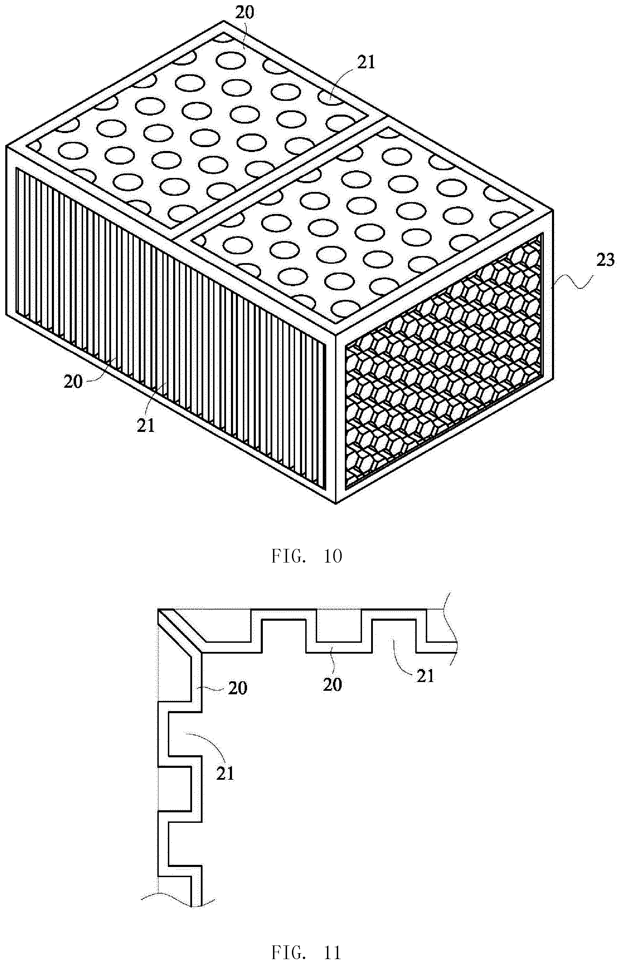

In addition, please refer to FIG. 10, if the pits 21 on the structural plate 20 are directional (for example, the elongated strips as shown in the figure). In order to balance the stress and increase the strength, the pits 21 of adjacent structural plates 20 have different orientations or types. FIG. 10 is merely an illustration, which may be any shape and arrangement configuration, in addition to the aforementioned regular patterns, other irregular or non-geometric patterns or logos, special trademarks, patterns, etc. and whose depth, position, angle can be varied. The design and configuration can also be modified according to the requirements of each face. For example, the bottom surface can be designed with high-strength patterns and configurations (such as hexagonal honeycomb arrangement), and the side surface can be configured with medium-strength patterns or arrangements, and the top surface can also be designed as LOGO, special trademark, pattern, etc. Furthermore, as shown in FIG. 11, the pits 21 of the adjacent structural plates 20 are engaged with each other at a contact location of the interior of the box to further improve the strength of the engagement and the whole box, or can replace the reinforcing strips 23 or the frame plates 24, etc.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A composite board structure, **characterized by** comprising:
a supporting board being a flat plate shape; and
a structural plate having a plurality of pits to define a plate surface side and a pit side, wherein the structural plate is disposed on one side of the supporting board with the pit side.

2. The composite board structure according to claim 1, **characterized in that** the pits have a closed annular shape.

3. The composite board structure according to claim 1, **characterized in that** the structural plate further comprising a connecting rib to connect at least two pits.

4. The composite board structure according to claim 1, **characterized in that** the supporting board further comprising at least on pit, wherein the pit of the supporting board is contacted to the pits of the structural plate or not.

5. A composite board structure, **characterized by** comprising:
a supporting board being a flat plate shape; and
a structural plate, being a thick plate and having a plurality of through holes to dispose on one side of the supporting board.

6. The composite board structure according to claim 5, **characterized in that** the pits have a closed annular shape.

7. A box structure formed by a plurality of composite boards, **characterized by** that:
the composite board includes a supporting board and a structural plate, wherein the supporting board is a flat plate shape and the structural plate has a plurality of pits to define a plate surface side and a pit side, wherein the structural plate is disposed on one side of the supporting board with the pit side.

8. The box structure according to claim 7, **characterized in that** the pits have a closed annular shape.

9. The box structure according to claim 7, **characterized in that** the structural plate further comprising a connecting rib to connect at least two pits.

10. The box structure according to claim 7, **characterized in that** the supporting board further comprising at least on pit, wherein the pit of the supporting board is contacted to the pits of the structural plate or not.

11. A box structure formed by a plurality of structural plates, **characterized by** that:
the structural plate has a plurality of pits.

12. The box structure according to claim 11, **characterized in that** the pits have a closed annular shape.

13. The box structure according to claim 11, **characterized in that** the structural plate further comprising a connecting rib to connect at least two pits.

14. The box structure according to claim 11, **characterized in that** the pits of adjacent structural plates have different orientations or types.

15. The box structure according to claim 11, **characterized in that** the pits of adjacent structural plates are engaged with each other at a contact location.

16. The box structure according to claim 11, **characterized in that** a reinforcing strip is arranged between the adjacent structural plates.

17. The box structure according to claim 11, **characterized in that** a frame plate is arranged outside the structural plates.
